**Europäisches Patentamt**

**European Patent Office**

**Office européen des brevets**

(11) Publication number : **0 515 208 A2**

(12) **EUROPEAN PATENT APPLICATION**

(21) Application number : **92304665.0**

(22) Date of filing : **22.05.92**

(51) Int. Cl.$^5$ : **C08B 1/08, C08J 3/12**

(30) Priority : **24.05.91 JP 148138/91**

(43) Date of publication of application :
**25.11.92 Bulletin 92/48**

(84) Designated Contracting States :
**DE FR GB**

(71) Applicant : **NISSHINBO INDUSTRIES, INC.**
**3-10 Yokoyama-cho, Nihonbashi**
**Chuo-ku ,Tokyo (JP)**

(72) Inventor : **Takenishi, Soichiro, c/o Tokyo**
**Research Center**
**Nisshinbo Ind., Inc., 1-18-1 Nishiaraisakae-cho**
**Adachi-ku, Tokyo (JP)**
Inventor : **Teramatsu, Yasuhide, c/o Tokyo**
**Research Center**
**Nisshinbo Ind., Inc., 1-18-1 Nishiaraisakae-cho**
**Adachi-ku, Tokyo (JP)**

(74) Representative : **Stuart, Ian Alexander et al**
**MEWBURN ELLIS 2 Cursitor Street**
**London EC4A 1BQ (GB)**

(54) Cellulose powder and method of producing the same.

(57) A fine cellulose powder consists of rounded particles, has a viscosity average polymerization degree of 20 - 150, and exhibits a water absorption coefficient of 100 % or more relative to its own weight. A method of producing the fine cellulose powder comprises the steps of aging alkali cellulose to reduce its average polymerization degree and increase its friability, neutralizing the aged alkali cellulose, and pulverizing the result, preferably in a jet mill.

EP 0 515 208 A2

Jouve, 18, rue Saint-Denis, 75001 PARIS

This invention relates to a cellulose powder. A preferred embodiment consists of rounded particles and may exhibit a water absorption coefficient of not less than 100% relative to its own weight. The viscosity average polymerization degree (hereinafter referred to simply as "average polymerization degree") is 20-150. A method of producing the same is also provided.

A number of methods are known for obtaining fine cellulose powder. These include:

(1) A method of producing fine crystalline cellulose by acid hydrolyzation of the non - crystalline portions of cellulose of wood, cotton or the like and pulverizing the result. However, this method has shortcomings in that the powder particles are angular owing to the presence of residual crystalline portions in the hydrolyzed and removed non - crystalline portions, and also in that the product powder is expensive and exhibits poor water absorption.

(2) A method in which cellulose or a derivative thereof is coagulated by dripping through capillaries into a liquid coagulant. This method has the drawbacks of low productivity, difficulty of producing fine particles and very high operating cost.

(3) A method in which a solution of acetyl cellulose or other cellulose compound soluble in an organic solvent is spray - dried and then converted back into cellulose by deacetylization or the like. This method also has various disadvantages, such that it involves complicated processing steps and requires recovery of the solvent.

This invention was accomplished in view of the fact that commercial production of fine cellulose powder exhibiting high water absorption is difficult to achieve by prior art methods because of the complexity of the production process, the difficulty encountered in the handling of intermediate raw materials and chemicals, and the high cost of production. A preferred embodiment of the invention may provide a fine cellulose powder consisting of rounded particles and exhibiting a high water absorption, and a simple and inexpensive method of producing the same.

The fine cellulose powder according to the present invention exhibits an average polymerization degree of 20 - 150 as measured according to the method stipulated by JIS (Japanese Industrial Standard) L1015 - 1981. Up to now, it has not been possible to achieve a high water absorption coefficient with a cellulose powder having a polymerization degree of such a low level. The particle diameter of the fine cellulose powder is small, specifically between 0.1 $\mu$ m and 50 $\mu$ m. The swelling factor of the fine powder in water is desirably not less than 2 based on the particle volume of the powder in dry state taken as 1.

The water absorption coefficient of the fine powder measured by soaking it in water for 30 minutes under reduced pressure and then freeing it of non-absorbed water by centrifuging at 3000 rpm for 30 minutes is preferably not less than 100% relative to the dry weight of the fine powder.

The water absorption coefficient referred to here is defined as

$$(W - w) / w \times 100(\%)$$

where w is the weight of the fine powder before water absorption and W is the weight thereof after water absorption.

The fine powder of this invention can be produced by neutralizing brittle alkali cellulose whose average polymerization degree has been reduced by aging and pulverizing the result.

The polymerization degree of alkali cellulose is reduced by prolonged aging and this facilitates pulverization after neutralization and drying.

Alkali cellulose is prepared for use as a raw material. While the conditions for preparing the alkali cellulose are not particularly defined, it is typically prepared by soaking cellulose in a 14 °C, 17.5 % caustic soda solution and compressing the result to increase its specific weight by a facter of 2.8, followed by pulverization in a kneader or other such grinding machine.

The aging may be conducted at a relative humidity of not less than 70 %, preferably not less than 90 %, and not more than 100 % and a temperature of not less than 30 °C and not more than 100 °C, preferably not less than 45 °C and not more than 75 °C, for not less than 1 day and not more than 20 days. This aging provides an alkali cellulose exhibiting an average polymerization degree of around 30 - 200.

The aged alkali cellulose may be neutralized by casting into an aqueous solution containing at least a stoichiometric amount of sulfuric acid, hydrochloric acid or the like relative to the alkali content of the alkali cellulose.

The Product of this neutralization may be dried in an ordinary constant - temperature drying oven or the like, and then pulverized. Pulverization can be conducted using a ball mill or other ordinary type of dry grinding machine. The use of a jet mill is particularly advantageous. This pulverization yields a fine cellulose powder having an average polymerization degree of 20 - 150.

While the particles of the fine powder obtained according to this invention may have differing shapes they are invariably rounded. Although the particle diameter varies with the production conditions, production of a fine powder with a particle diameter falling in the range of 0.1 - 50$\mu$m can be readily achieved. The swelling factor of the fine powder in water is not less than 2.

DESCRIPTION OF THE PREFERRED EMBODIMENTS

The invention will now be explained with reference to specific examples.

Example 1

Pulp soaked in a 17.5 wt % aqueous solution of sodium hydroxide at 14 °C for 1 hour was squeezed to 2.8 times its original specific gravity and left to stand for 5 days at 50 °C.

The resulting alkali cellulose, which had an average polymerization degree of 120, was neutralized in a 5 % aqueous sulfuric acid solution under thorough stirring. The result was thoroughly washed with water, filtered to obtain a wet cake, completely broken up, dried in a constant - temperature drying oven, and then pulverized in a jet mill.

The diameters of particles of the cellulose powder obtained in this way fell in the range of 0.4 - 30 $\mu$ m and averaged 6.0 $\mu$ m in dry state. In water they fell in the range of 1 - 80 $\mu$ m and averaged 14.0 $\mu$ m. The water absorption coefficient of the powder was 160 %. Its average polymerization degree as measured in accordance with JIS L - 1015 - 1981 was 110.

The water absorption coefficient of the powder measured by soaking it in water for 30 minutes under reduced pressure and then freeing it of non - absorbed water by centrifuging at 3000 rpm for 30 minutes was 160 % relative to its own weight.

Example 2

Pulp soaked in a 17.5 wt % aqueous solution of sodium hydroxide at 14 °C for 1 hour was squeezed to 2.8 times its original specific gravity and left to stand for 10 days at 50 °C.

The resulting alkali cellulose, which had an average polymerization degree of 90, was neutralized in a 5 % aqueous sulfuric acid solution under thorough stirring. The result was thoroughly washed with water, filtered to obtain a wet cake, completely broken up, dried in a constant - temperature drying oven, and then pulverized in a jet mill.

The diameters of the particles of the cellulose powder obtained in this way fell in the range of 0.1 - 7 $\mu$ m and averaged 4.0 $\mu$ m in dry state. In water they fell in the range of 0.3 - 20 $\mu$ m and average 10.0 $\mu$ m. The water absorption coefficient of the powder was 180%. Its average polymerization degree as measured in accordance with JIS L - 1015 - 1981 was 70.

Comparative example

Commercially available cellulose powder produced by hydrolyzing the non - crystalline portions of pulp but still containing crystalline portions was tested to determine its properties. The diameters of its particles were found to fall in the range of 5 - 80 $\mu$ m and average 30.0 $\mu$ m in dry state and to fall in the range of 5 - 80 $\mu$ m and average 31.5 $\mu$ m in water. Its water absorption coefficient was measured to be 98%.

The fine cellulose powder according to the invention has excellent swelling property and exhibits good absorption property with respect to a wide range of liquids, including aromatization agents, pesticides, antiseptics, dye solvents and ink. It can thus be used as a carrier for these liquides or as a filler for various purposes.

The conventional fine cellulose powder produced by hydrolyzing the non - crystalline portions of pulp or the like but still containing crystalline portions has a large particle size and exhibits inadequate absorption property with respect to various substances. In contrast, the fine cellulose powder according to this invention consists of particles that are not only small in diameter but also rounded, and further exhibits absorption property with respect to various substances. It is thus extremely useful.

**Claims**

1.  A cellulose powder having a viscosity average polymerization degree of 20 - 150 and a particle diameter of 0.1 - 50 $\mu$ m,

2.  A cellulose powder according to claim 1 having a swelling factor in water of not less than 2.

3.  A cellulose powder according to claim 1 having a water absorption coefficient of not less than 100 % as measured by soaking in water for 30 minutes under reduced pressure followed by centrifuging at 3000 rpm for 30 minutes for removal of non - absorbed water.

4.  A method of producing fine cellulose powder comprising the steps of neutralizing brittle alkali cellulose whose average polymerization degree has been reduced by aging and pulverizing the result.